# EUROPEAN PATENT APPLICATION

(11) **EP 2 610 790 A1**
(43) Date of publication of application: **03.07.2013**
(21) Application number: 11306801.9
(22) Date of filing: 28.12.2011
(51) Int. Cl.: G06Q 10/06

(54) **Improved method and system for searching for and/or purchasing products or services**

(71) Applicant: Amadeus, 06410 Biot (FR)
(72) Inventor: Dufresne, Thierry, 06650 Opio (FR); Dourthe, Cedric, 06000 Nice (FR); Amadieu, Olivier, 06560 Valbonne (FR); Piat, Benjamin, 06410 Biot (FR)
(74) Representative: Anderson, Angela Mary

(57) **Abstract**

A method of searching for a product or service and presenting the results in a calendar type view; wherein the search is instigated in a request which includes a plurality of parameters, such as a city pair and/or a date, and one or more upsell criteria; the method comprising the steps of: determining via a computer search, results which meet at least one parameter and one or more upsell criteria to thereby determine a flight domain; progressively determining the flight domain via a computer to produce refined results; limiting the number of results in the flight domain based on the at least one parameter, one or more upsell criteria and first one of a plurality of abstraction levels to thereby obtain the refined results, which refined results have lowest prices; and presenting the refined results in a view such as a calendar matrix view.

## Description

### Field of the invention

The present invention relates to an improved method and system for searching for and/or shopping for products or services, particularly, but not exclusively, in the travel industry.

### Background of the invention

In the travel domain, there is an increasing use of calendars to facilitate the sale of certain products and services, such as airplane tickets and the like. In addition, there is a continual drive towards pushing upselling capabilities for the sale of travel products. For example, the ability for a user to be able to purchase an airplane ticket from a more extensive list of suppliers or sources.

In its simplest sense upselling relates to selling more profitable products and services than would normally be the case. However, upselling can also relate to providing more diverse offerings to make the user consider buying options they would otherwise not have been aware of. Upselling is, in general terms, the practice of offering different, additional and extra services or products with a product and/or service being sought by a user. The different, extra or additional services and products may be linked to the product and/or services or may be complementary or associated with the product and/or service. In certain circumstances there may be minimal or no linkage, for example promotional extras.

The calendar in the context of the shopping and searching of online flights and other services is basically a matrix which includes a combination of outbound and inbound dates. The outbound dates may be found on the x-axis and the inbound dates on the y-axis, each axis representing dates on which the outbound or inbound flights can take place. The interception of the outbound and inbound dates includes a price which can then be used by the user to select a preferred combination of outbound and inbound dates corresponding to a priced itinerary.

A need to combine the attractions of a calendar related sales technique and upselling has been expressed and presents a challenge.

A naïve solution to the combined problems of calendar sales and upselling is to use a current calendar search mode and stop searching only when all search limitations have been successfully filled for all date combinations. However, this means that a search of a particular flight domain would be stopped only once all the recommendations have been found for all the upsell limitations on all date combinations in the calendar.

In general, the travel solution to be searched would be very big and as a result would be operationally unsustainable, at least in terms of CPU capability and memory capacity. The scale of the problem can be seen from a simple example. In a 7x7 calendar with three upsell criteria, each having a number of choices, the number of possible combinations and possible recommendations could be many trillions.

The complexity and size of the number of possible recommendations depends on the amount of diversity, the dimensions of the diversity, and the applicability of the diversity for both the itinerary application and for the requested segment application. Proposing alternative recommendations in a calendar would require exploration of parts of flights in a domain that would not usually have been explored. The current calendar systems tend to stop once the cheapest recommendation is guaranteed. The expected number of fare/flight solutions that must be processed for a calendar having a diversity of three time windows for a given-day and flexibility in both outbound and inbound flights is of the order of 5x10¹⁰. The complexity of the calendar if three upsell criteria are added would mean that 5x10¹³ combinations of fare and flight solutions would have to be processed.

The processing power to handle this number of combinations or recommendations would be impossible to achieve in real time with current processing capabilities. The number of calculations would be immense and require an unreasonable amount of processing power. In addition, the ability to view and display the vast quantities of information is virtually impossible and selecting options from such a display would be very difficult for a user.

Systems and methods have been proposed which in general include a user, in a first step, launching a first search, such as a calendar search to search for the cheapest recommendations for a specific date or dates. In a second step, the user can optionally launch a second search associated with the first search, such as an upsell search. The second search provides a selection of the cheapest recommendations associated with predetermined limitations from the user associated with the upsell process, such as direct and non-direct flights, specific time, specific airport, etc. These solutions are naïve and include no sophistication other than merely combining two searches.

More specifically, US2002/0065688 (British Airways) discloses a method and system for processing a reservation associated with a request comprising at least one limitation. Browser software sends a first request to a web server to obtain a resulting data set. The web server then sends specific compressed resulting data sets comprising templates and scripts. The templates and scripts allow an additional possible local search at the browser software level. As a result, the user can select additional limitations to request additional searches at the browser software level without sending the queries to the web server. The presence of templates and scripts allows the browser software to apply fare rules when requested.

US2009/0150343 (Kayak Software Corporation) discloses a method and system for processing a reservation on a search engine. The system comprises a constraint evaluation module for building queries associated with requests from a user. The method carries out a first search in a very short processing time to provide first results associated with a first request of the user. The constraint evaluation module then builds a second query to encompass additional limitations related to the first request of the user.

The prior art does not solve the problem of dynamically providing multi-dimensional data such as date, time window, or a combination of additional information, such as date/airline/direct flight, for a user requesting a trip recommendation. There is still a need for the user to have an improved search system which can provide multi-dimensional data results and which encompasses a substantial amount of different types of data, in a reasonable time frame. In addition, there is a need for a unique display instead of several displays at a time, as seen in the prior art.

### Objects of the Invention

It is an object of the present invention to overcome at least some of the problems associated with the prior art.

It is a further object of the present invention to provide a system and method for improving searching for multi-dimensional data in a reasonable time frame.

### Summary of the invention

The present invention provides a method and system as set out in the accompanying claims.

According to one aspect of the present invention there is provided a method of searching for a product or service and presenting the results in a calendar type view; wherein the search is instigated in a request which includes a plurality of parameters, such as a city pair and/or a date, and one or more upsell criteria; the method comprising the steps of:
- determining via a computer search, results which meet at least one parameter and one or more upsell criteria to thereby determine a flight domain;
- progressively determining the flight domain via a computer to produce refined results;
- limiting the number of results in the flight domain based on the at least one parameter, one or more upsell criteria and first one of a plurality of abstraction levels to thereby obtain the refined results, which refined results have lowest prices; and
- presenting the refined results in a view such as a calendar matrix view.

Optionally, the step of limiting the flight domain via a computer comprises limiting at a further abstraction level to further limit the number of results to produce further refined results.

Optionally, the step of limiting the flight domain via a computer comprises limiting at all abstraction levels.

Optionally, the step of determining results comprises determining results which match all parameters.

Optionally, the step of limiting the flight domain via a computer comprises limiting the results based on an abstraction level relating to upsell criteria, and the step of presenting the refined results comprises presenting the upsell criteria in the calendar view.

Optionally, further comprising carrying out a plurality of pre-validation checks via a computer at each abstraction level to eliminate results which do not meet all the plurality of parameters and the one or more upsell criteria.

Optionally, the step of carrying out a plurality of pre-validation checks at each abstraction level comprises carrying out pre-validation checks based on fare expertise parameters associated with the product or service.

Optionally, further comprising finding via a computer the least expensive result for each upsell criterion.

Optionally, further comprising finding via a computer the least expensive result for a combination of upsell criteria.

Optionally, the step of displaying the refined results in a calendar view comprises entering the least expensive result in each part of the calendar view for a combination of abstraction levels to which the refined result relates.

Optionally, further comprising representing via a computer the calendar view as a matrix of outbound and inbound flights and associated least expensive price for the combination of outbound and inbound flights based on the relevant abstraction level or levels.

According to a second aspect of the present invention there is provided a system for searching for a product or service and presenting the results in a calendar type view; wherein the search is instigated in a request which includes a plurality of parameters, such as a city pair and/or a date, and one or more upsell criteria; the system comprising:
- a search engine for determining via a computer search, results which meet at least one parameter and one or more upsell criteria to thereby determine a flight domain;
- wherein the search engine progressively determines the flight domain at a plurality of abstraction levels to produce refined results and further limits the number of results in the flight domain based on the at least one parameter, one or more upsell criteria and a first one of a plurality of abstraction levels to obtain refined results having lowest prices; and
- a display for presenting the refined results in a view such as a calendar matrix view.

Optionally, further comprising limiting at a further abstraction level to further limit the number of results to produce further refined results.

Optionally, limiting the flight domain at all abstraction levels.

Optionally, the results determined match all parameters.

Optionally, the abstraction level relates to upsell criteria, and the refined results comprises the upsell criteria in the calendar view.

Optionally, a plurality of pre-validation checks are carried out at each abstraction level to eliminate results which do not meet all the plurality of parameters and the one or more upsell criteria.

Optionally, the plurality of pre-validation checks is carried out at each abstraction level based on fare expertise parameters associated with the product or service.

Optionally, further comprising finding the least expensive result for each upsell criterion.

Optionally, further comprising finding the least expensive result for a combination of upsell criteria.

Optionally, the refined results displayed in the calendar view comprise the least expensive result in each part of the calendar view for a combination of abstraction levels to which the refined result relates.

Optionally, the calendar view is a matrix of outbound and inbound flights and associated least expensive price for the combination of outbound and inbound flights based on the relevant abstraction level or levels.

In a third aspect of the present invention there is provided a computer program comprising instructions for carrying out the steps of the method or methods as defined in the claims when said computer program is executed on a computer system.

### Brief description of the drawings

Reference will now be made, by way of example, to the accompanying drawings, in which:
Figure 1 is a block diagram of fare expertise implementation, in accordance with an embodiment of the invention;
Figure 2 is block diagram showing more details of the fare domain explorer of figure 1, in accordance with an embodiment of the invention;
Figure 3 is a combined block diagram and flow chart for showing the steps of the fare expertise process, in accordance with an embodiment of the invention; and
Figure 4 is an example of a display of available price solution including upsell information, in accordance with an embodiment of the invention.

### Detailed description of the preferred embodiments

The invention proposes a fully integrated solution within a Universal Faring Engine (UFE) that allows upsell recommendations to be proposed within a calendar search with the minimum possible operational impact.

An aim is to offer to users an enhanced searching and shopping experience, which includes the ability to see all the cheapest prices for all of the upsell alternatives within a calendar view. This allows the user to easily find the best date combination and the upsell criteria that fulfills their personal needs.

From a providers' point of view, the system will ensure that upsell alternatives are properly highlighted to the user, which in turn may enhance sales.

The invention offers flexibility for the upsell criteria to be taken into account from both the user and providers' points of view. The invention relates to an optimized flight domain exploration based on fare expertise that is applicable to any low fare search products, including transactional products and massive computation products.

The invention is fully compliant with all current and future functionalities that can be implemented within and around the UFE and allows dynamic access to flight and availability data, thus reducing the impact of low fare searches on any external system that handles this type of data.

The invention can be used in a multi-product search context including attributes such as flights, trains, cars, hotels, etc. In addition, the invention is compatible with a parallel architecture that enables a big calendar to be broken into many smaller calendars. As such, in an example having a high operational cost caused by many complex upsell criteria and/or caused by another input option, it would still be possible to apply a parallel architecture technical solution.

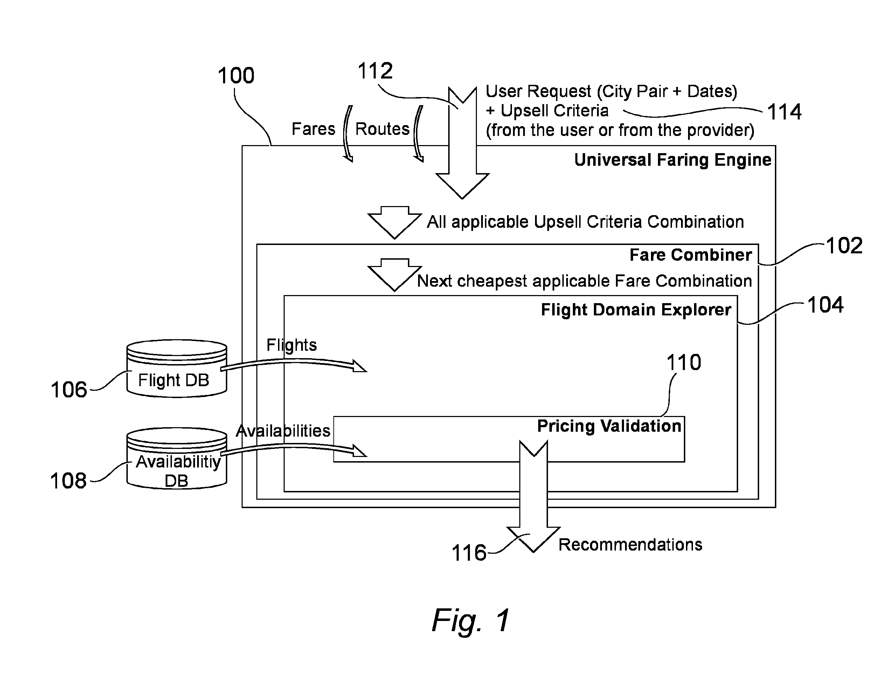

The invention will now be described in greater detail. Referring to figure 1 a Universal Faring Engine (UFE) 100 is shown. The UFE is able to identify and obtain fare quotes for a specific itinerary from a number of different providers. The specific itinerary may be typically based on an origin and destination and possibly a date. The UFE provides many functionalities. The UFE processes the request and provides a list of recommendations 116 having the cheapest price for each upsell criteria. These are then communicated to the user. This will now be described in greater detail.

In the context of the present invention, the main modules or processes are a fare combiner module or process 102 and a flight domain explorer module or process 104. The fare domain explorer can access information from a flight database 106 and an availability database 108. The flight domain explorer also includes a pricing validation module 110. In use, a user will enter a user request 112, typically including parameters such as an origin destination and date and/or passage type. The request may include upsell criteria 114 which can be generated by the user or the provider. The upsell criteria may include ticket restrictions, a decision on direct or non-direct flights, a preferred airline, a preferred seat category or any other appropriate preference.

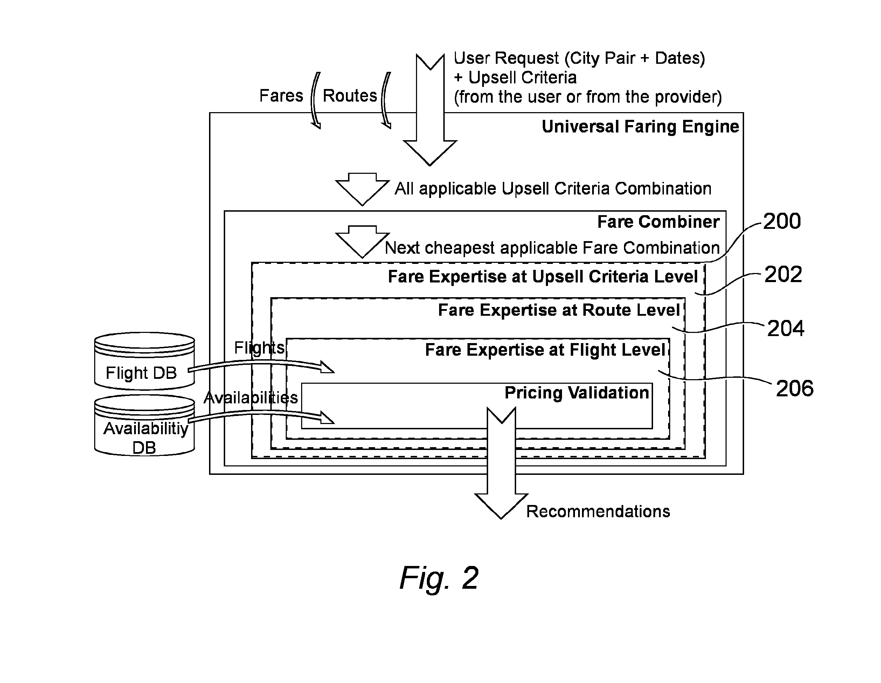

Referring to figure 2, the flight domain explorer 200 is shown in greater detail and includes a set of new modules or processes. The set of new modules relates to using fare expertise to optimize the flight domain exploration process. This limits the flight domain exploration and reduces the access to some external and internal components that are operationally sensitive, such as a flight server, availability server, pricing validation, etc.

Fare expertise is a set of pre-validation checks that are based on fare, rule or category data relative to a defined abstraction level or layer, that are applied over at least a part of the overall flight domain. These levels or layers are an upsell criteria level 202, a route level 204 and a flight level 206. The fare expertise output determines if a fare combination is applicable over a set of elements in the flight domain, effectively refining the search. An object is to try to find a flight that matches the user parameters and any upsell criteria by selecting options for further processing which meet the various criteria and/or parameters. For example, if the user has entered an upsell criteria to get the "n" cheapest airlines, the search in the flight domain will be restricted to only those fares which match with these. Ideally, the fares selected will include the cheapest flights from a number of airlines matching the requirements of the user.

The flight domain explorer includes this new set of components that are embedded one inside another. The goal of this embedded structure is to drive the exploration of the flight domain in an optimized manner. Each one of these new components avoids the exploration of the whole flight domain that is not applicable to the current fare combination. The applicable flight domain is determined by the fare expertise processes or modules. Thus the effective flight domain processed for each fare combination is very much reduced when compared with traditional calendar and upsell searching. The three abstraction levels mentioned above are examples and other types may apply in different circumstances.

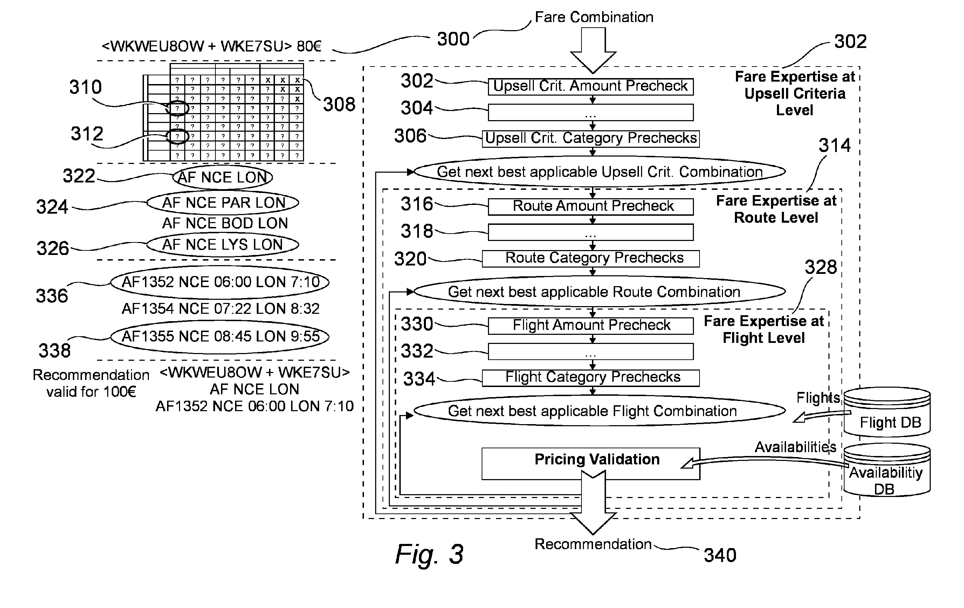

Referring now to figure 3, the step by step process of the fare expertise implementation is described in more detail. A fare combination 300 is entered into the fare expertise at an upsell criteria level 302. The fare combination 300, represented as <WKWEU8OW + WKE7SU> 80€ , is composed of two different fares (WKWEU8OW and WKE7SU) and the associated total fare amount is the sum of both the fare amounts, namely €80. The fare combination 300 is passed to the fare expertise at an upsell criteria level module and the pre-validation checks for: amount 302, time of day 304, and category 306 are carried out. This produces a table as shown at 308 (in the drawings the pre-validation checks are referred to as prechecks to reduce the amount of space taken up in the drawing). The table shows outbound dates in the "x" direction and inbound dates in the "y" direction and includes all applicable combinations computed by the UFE. Each date shows three different time slots: for example, before 9am; 9am-5pm; and after 5pm. Two options appear to be appropriate for further consideration on the current fare combinations and are those applicable to the fare combination. The upsell criteria have refined the search results. These applicable options 310 and 312 are marked on the table. After the various pre-validation checks, option 310 is deemed to be the most appropriate and is passed to the next fare expertise level. The other upsell criteria combinations are not applicable because of arrival/departure times.

The upsell criteria combinations determined in this way are effectively applicable to the current fare combination 300. Any part of the flight domain that does not correspond to this applicable upsell criteria combination will not be processed further. All solutions which do not match the fare combination are eliminated from further processes.

Each of the pre-validation checks in this and the subsequent fare expertise levels limit the ongoing recommendations for further fare expertise level processing. The amount pre-validation check will ensure that the search results that are possible solutions to the user request are ideally equal to or below a certain amount, and include the cheapest price. Any possible results that do not match these criteria will not continue to the next pre-validation check. Again, the fare expertise level considerations have refined the search results.

Similarly, the time of day pre-validation check will only pass results which may match a specific time period, whilst the category pre-validation check will only pass results which match a predetermined category, such as the minimum stay category (306); excluding the journeys on which the stay at the destination is insufficiently long to make a connection.

The fare expertise at the upsell criteria level module is provided by the fare combiner module (102 in figure 1) with the fare combination 300 along with all upsell criteria combinations. The objective is to provide the fare expertise at route level with the applicable upsell criteria combination. Once all the applicable upsell criteria combinations have been provided to the fare expertise at the route level, another new fare combination is proposed to the fare expertise upsell criteria level module by the fare combiner and the process continues. This process may be repeated as often as necessary, based on the fare combination.

The fare expertise at route level module 314 is composed of a set of pre-validation checks at the route level, such as a pre-validation check for amount 316, category 320, etc. The routes determined in this way are effectively applicable to the current fare combination and upsell criteria combination. Any part of the flight domain that does not correspond to this applicable route combination will not be processed further. The routes 322, 324 and 326 are possible routes that are applicable. From these routes the system determines that route 322 is the first one to investigate, because less taxes apply.

The fare expertise at route level module is provided by the fare expertise at upsell criteria level module with a fare combination as well as with an upsell criteria combination. The objective is to provide the fare expertise at flight level with the applicable route combinations. The system starts with the best options in respect of price and then proceeds to determine the price for all other options, always looking for an option which is better than the current option. Any better options are then included in the list. The process is carried out at all levels or layers. Once all the applicable route combinations have been provided to the fare expertise at flight level, another new upsell criteria combination is proposed to the fare expertise route level module by the fare expertise upsell criteria level.

The fare expertise at flight level module 328 is composed of a set of pre-validation checks at the flight level, such as a pre-validation check for flight amount 330, flight category 334, etc. The flights determined in this way are effectively applicable to the current combinations of fares, the upsell criteria, and the routes. Any part of the flight domain that does not correspond to this applicable flight combination will not be processed further. Two possible flights 336 and 338 are selected by the system. Subsequently flight 336 is offered as a recommendation 340 to populate the calendar.

The fare expertise at flight level module is provided by the fare expertise at route level module with a fare combination as well as with an upsell criteria combination and a route combination. The object is to provide the pricing validation module only with the results that match all elements of the process thus far. Once the entire applicable flight domain has been provided to a pricing validation module, another new route combination is proposed to the fare expertise flight level module by the fare expertise route level.

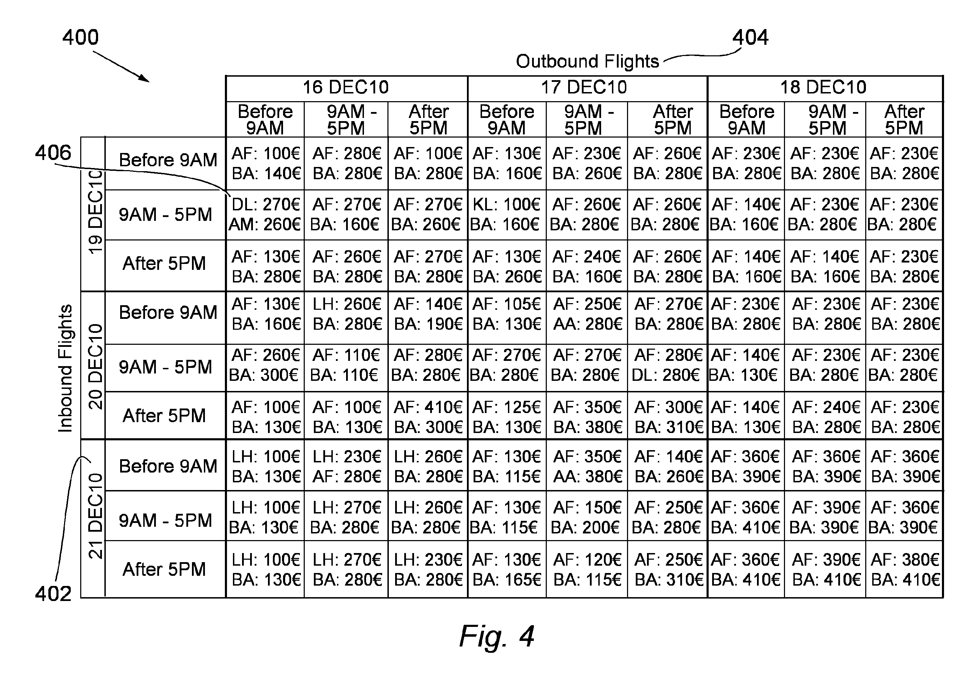

Pricing validation is thus provided only with the minimum amount of data from the flight domain that is applicable according to the fare expertise at the upsell, route and flight levels further refining the search domain. As a result, access to external elements (e.g. an availability database) for the pricing validation are optimized and the internal access to the other servers are greatly reduced. The final recommendation produced by each new fare combination being analyzed by the system results in a calendar view including all the various upsell criteria. An example of such a calendar view is shown in figure 4.

The example presented above relates to three fare abstraction levels, namely upsell criteria, route and flight. It will be appreciated that other abstraction levels can be used instead of or in addition to those mentioned above, for example, an availability context (whether the passenger is wait-listed or not); or a multi-ticket and/or mono ticket context criterion.

Figure 4 shows a calendar 400 showing outbound flight dates 404 and inbound flight dates 402. Each of the outbound and inbound flight dates are shown for three outbound/inbound dates and three time windows. Accordingly, for a specific date for an outbound and inbound flight, there is a 3X3 matrix 406 of recommendations. The matrix is populated in this instance with two airlines and respective prices for each element of the matrix. This provides the user with a vast amount of choices but is presented in a pleasing and manageable format. The user can now select their preferred option by clicking on the relevant box in the calendar. The system will then go on to present further information and allow the user to purchase the preferred option.

As previously noted, the resultant calendar view is populated with easily accessible information which enables a user to visualize a vast choice of recommendations in a single view. The resultant calendar can be easily navigated by the user. The calendar view can be adapted to present different information depending on the user request and the intrinsic controls built into the system. The provider can influence and suggest various options to sell other services and illustrate special offers and the like. The 3X3 matrix illustrated in the example shown may be smaller or larger or of a different shape depending on the setup of the time periods or other criteria.

The invention has been described in the travel domain, specifically with respect to the search, selection and purchase of flights. It will be appreciated the invention could apply to other travel fields and also to non-travel related methods and processes, such as trains, hire cars and the like.

The present invention has been described with reference to both software programs and applications and hardware modules. It will be appreciated that the functions carried out as part of the invention could be carried out in either software or hardware modules or any combination thereof, irrespective of the examples given herein. The invention can be carried out on a computer or other appropriate machine and includes a number of transformations, such as conversion of search results into a calendar view, processing of the results to ensure the cheapest price is presented for each fare combination and/or each upsell combination.

It will be appreciated that there are many variations of the various features described above, which can fall within the scope of the present invention

## Claims

1. A method of searching for a product or service and presenting the results in a calendar type view; wherein the search is instigated in a request which includes a plurality of parameters, such as a city pair and/or a date, and one or more upsell criteria; the method comprising the steps of:
- determining via a computer search, results which meet at least one parameter and one or more upsell criteria to thereby determine a flight domain;
- progressively determining the flight domain via a computer to produce refined results;
- limiting the number of results in the flight domain based on the at least one parameter, one or more upsell criteria and first one of a plurality of abstraction levels to thereby obtain the refined results, which refined results have lowest prices; and
- presenting the refined results in a view such as a calendar matrix view.

2. The method of claim 1, wherein the step of limiting the flight domain via a computer comprises limiting at a further one of the plurality of abstraction levels to further limit the number of results to produce further refined results.

3. The method of claim 1 or claim 2, wherein the step of limiting the flight domain via a computer comprises limiting at all abstraction levels.

4. The method of any preceding claim, wherein the step of determining results comprises determining results which match all parameters.

5. The method of any preceding claim, wherein the step of limiting the flight domain via a computer comprises limiting the results based on an abstraction level relating to upsell criteria, and the step of presenting the refined results comprises presenting the upsell criteria in the calendar view.

6. The method of any preceding claim, further comprising carrying out a plurality of pre-validation checks via a computer at each abstraction level to eliminate results which do not meet all the plurality of parameters and the one or more upsell criteria.

7. The method of claim 6, wherein the step of carrying out a plurality of pre-validation checks at each abstraction level comprises carrying out pre-validation checks based on fare expertise parameters associated with the product or service.

8. The method of any preceding claim, further comprising finding via a computer the least expensive result for each upsell criterion.

9. The method of claim 8, further comprising finding via a computer the least expensive result for a combination of upsell criteria.

10. The method of claim 8 or claim 9, wherein the step of displaying the refined results in a calendar view comprises entering the least expensive result in each part of the calendar view for a combination of abstraction levels to which the refined result relates.

11. The method of any preceding claim, further comprising representing via a computer the calendar view as a matrix of outbound and inbound flights and associated least expensive price for the combination of outbound and inbound flights based on a relevant abstraction level or levels.

12. A system for searching for a product or service and presenting the results in a calendar type view; wherein the search is instigated in a request which includes a plurality of parameters, such as a city pair and/or a date, and one or more upsell criteria; the system comprising:
- a search engine for determining via a computer search, results which meet at least one parameter and one or more upsell criteria to thereby determine a flight domain;
- wherein the search engine progressively searches the flight domain at a plurality of abstraction levels to produce refined results and further limits the number of results in the flight domain based on the at least one parameter, one or more upsell criteria and a first one of a plurality of abstraction levels to obtain refined results having lowest prices; and
- a display for presenting the refined results in a view such as a calendar matrix view.

13. The system of claim 12, further comprising limiting the number of results in the flight domain at a further abstraction level to further limit the number of results to produce further refined results.

14. The system of claim 12 or claim 13, wherein limiting results in the flight domain is carried out at all abstraction levels.

15. The system of any of claims 12 to 14, wherein the results determined match all parameters.

16. The system of any of claims 12 to 15, wherein the abstraction level relates to upsell criteria, and the refined results comprises the upsell criteria in the calendar view.

17. The system of any of claims 12 to 16, wherein a plurality of pre-validation checks are carried out at each abstraction level to eliminate results which do not meet all the plurality of parameters and the one or more upsell criteria.

18. The system of claim 17, wherein the plurality of pre-validation checks is carried out at each abstraction level based on fare expertise parameters associated with the product or service.

19. The system of any of claims 12 to 18, further comprising finding the least expensive result for each upsell criterion.

20. The system of claim 19, further comprising finding the least expensive result for a combination of upsell criteria.

21. The system of claim 19 or claim 20, wherein the refined results displayed in the calendar view comprise the least expensive result in each part of the calendar view for a combination of abstraction levels to which the refined result relates.

22. The system of any of claims 12 to 21, wherein the calendar view is a matrix of outbound and inbound flights and associated least expensive price for the combination of outbound and inbound flights based on a relevant abstraction level or levels.

23. A computer program comprising instructions for carrying out the steps of the method according to any one of claims 1 to 11, when said computer program is executed on a computer system.
